# FASCICULE DE BREVET EUROPEEN

(11) **EP 1 695 134 B1**
(45) Date de publication et mention de la délivrance du brevet: **04.02.2009**
(21) Numéro de dépôt: 04804795.5
(22) Date de dépôt: 13.12.2004
(51) Int. Cl.: G02B 23/12, G02B 27/01

(54) **Dispositif de visualisation bioculaire modulaire**
Modulare bi-okulare Visualisierungseinrichtung
Modular bi-ocular visualization device

(30) Priorité: 16.12.2003 FR 0314715
(43) Date de publication de la demande: 30.08.2006
(73) Titulaire: Thales, 92200 Neuilly-Sur-Seine (FR)
(72) Inventeur: ESPIE, Jean-Luc, Thales Intellectual Property, F-94117 Arcueil Cedex (FR); NARCY, Gabriel, Thales Intellectual Property, F-94117 Arcueil Cedex (FR)
(74) Mandataire: Bréda, Jean-Marc
(86) Numéro de dépôt international: PCT/EP2004/053434
(87) Numéro de publication internationale: WO 2005/069056

(56) Documents cités:
- FR-A- 2 665 544
- FR-A- 2 721 719
- US-A- 5 140 151
- US-A- 5 307 204
- US-A- 5 361 162
- US-A- 5 969 859

## Description

Le domaine de l'invention est celui des dispositifs de visualisation pour soldat, notamment pour fantassin, destinés à améliorer ses capacités de progression et de tir dans ses missions de jour et de nuit.

Un fantassin moderne doit être capable d'accomplir différents types de missions et ces différentes missions nécessitent différents types de systèmes de visualisation.

De jour, lorsqu'il vise avec son arme, il peut devenir une cible potentielle. Pour pallier cet inconvénient, on dispose sur le canon de l'arme une caméra vidéo qui peut être, par exemple, à capteurs CCD (Charge Coupled Device). Cette caméra est couplée à un premier dispositif de visualisation monoculaire placé devant un de ses yeux. Ce dispositif permet au fantassin de prendre une visée déportée de la cible et par conséquent de tirer tout en restant protégé.

De nuit, le fantassin doit disposer, pour faciliter sa progression, de systèmes de vision nocturne dits à intensificateur de lumière. Ceux-ci peuvent être soit monoculaires, c'est-à-dire disposé devant un seul oeil, le deuxième oeil restant libre ; soit bioculaires ou binoculaires, c'est-à-dire disposés devant les deux yeux.

Lors d'une mission comportant un grand nombre de séquences de déplacement, l'utilisation d'un dispositif monoculaire permet au fantassin de conserver un grand champ de vision sur l'oeil dépourvu du dispositif monoculaire. Ainsi il peut évoluer plus facilement en conservant une bonne perception des reliefs, des obstacles au sol et des branchages situés dans son environnement proche, c'est-à-dire dans un périmètre typiquement inférieur à 5 mètres. La conservation d'un grand champ de vision permet également au fantassin de percevoir les possibles agressions latérales. Les dispositifs de visualisation à intensificateur de lumière fournissent une image intensifiée ayant une luminance par nature nettement supérieure à la luminance ambiante. Par conséquent, lorsque le fantassin relève son dispositif de visualisation monoculaire, il faut un certain temps d'adaptation avant que l'oeil qui percevait l'image intensifiée ne s'adapte aux faibles niveaux de luminosité. L'oeil libre déjà adapté à l'obscurité permet au fantassin de réduire son temps d'adaptation à l'obscurité.

Un bioculaire ou binoculaire de vision nocturne est par contre mieux adapté aux missions comportant un grand nombre de séquences d'observation. La vision bioculaire permet un meilleur confort visuel dans l'observation de l'environnement lointain, typiquement de l'ordre de 100 mètres.

Par conséquent, pour assurer au mieux les différentes missions du fantassin, plusieurs dispositifs de visualisation sont nécessaires. Actuellement, les systèmes de visualisation couramment utilisés sont soit des jumelles de vision de nuit à intensificateur soit des visuels de casque. Or, aucun de ces différents systèmes ne peut remplir toutes les missions de jour et de nuit telles qu'elles sont définies ci-dessus et de plus, ce sont généralement des systèmes coûteux et encombrants. Différents dispositifs d'observation sont divulgués dans FR 2 665 544 ; US 5,969,859 ; US 5,140,151 et US 5,361,162.

L'objet est de proposer un système modulaire comprenant essentiellement un premier dispositif monoculaire spécifiquement dédié aux missions de jour, un second module monoculaire spécifiquement dédié aux applications de nuit, la réunion des deux modules formant un dispositif de visualisation bioculaire ou binoculaire. Les avantages sont immédiats, cet équipement modulaire permet en effet d'assurer :
- la vision nocturne monoculaire utile au déplacement de nuit avec un oeil libre de tout dispositif ;
- la vision nocturne bioculaire utile à l'observation de nuit de longue durée avec un grand confort visuel ;
- la visée déportée monoculaire utile au tir tout en restant protégé ;
- la vision déportée bioculaire utile à l'observation de longue durée tout en restant protégé.

Il est à noter que cette disposition modulaire permet au fantassin de ne porter sur son casque que le module utile pour la mission en cours, ce qui lui épargne de porter un poids supplémentaire sur son casque lorsqu'il n'a à utiliser qu'un seul dispositif de visualisation monoculaire.

L'invention est définie dans larevendication 1. Elle sera mieux comprise et d'autres avantages apparaîtront à la lecture de la description qui va suivre et grâce aux figures annexées parmi lesquelles :
- La figure 1 représente un premier dispositif monoculaire ;
- La figure 2 représente ledit premier dispositif monoculaire fixé sur un casque ;
- La figure 3 représente un second dispositif monoculaire ;
- La figure 4 représente ledit second dispositif monoculaire fixé sur un casque ;
- La figure 5 représente un dispositif bioculaire ;
- La figure 6 représente ledit dispositif bioculaire fixé sur un casque.

L'ensemble bioculaire 1 est composé de deux modules monoculaires 2 et 3. Par conséquent, il est nécessaire que chaque module puisse à la fois fonctionner de façon autonome et également de façon couplée lorsque les deux modules de visualisation sont réunis pour ne former qu'un seul dispositif de visualisation binoculaire. Ces diverses fonctions sont possibles à la condition d'utiliser une lame semi-réfléchissante 23 disposée dans l'un des deux dispositifs monoculaires permettant le mélange des images provenant des premier et second dispositif de visualisation.

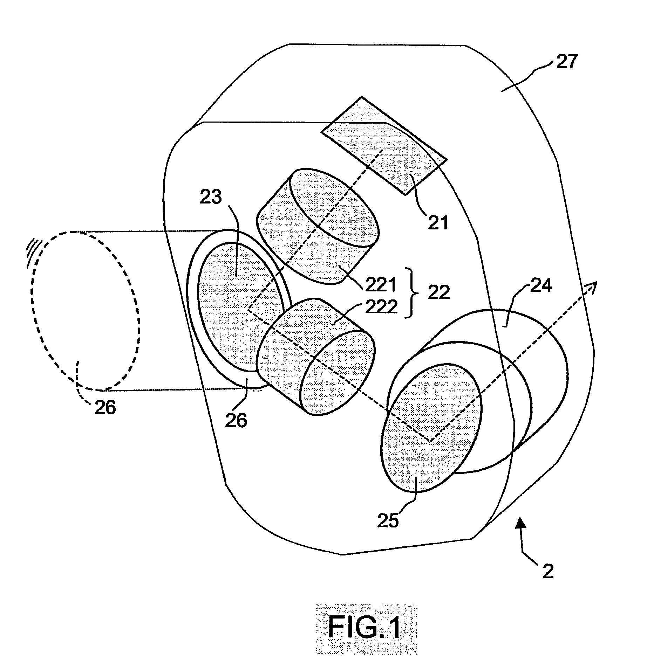

Sur les figures 1, 3 et 5, les conventions de dessin suivantes ont été adoptées : les corps mécaniques 27 et 37 sont représentés en traits fins, les sources d'image et les systèmes optiques en traits gras, le passage des rayons lumineux à travers les différents éléments optiques par des flèches pointillées et les pièces amovibles également par des traits en pointillés.

La figure 1 représente un premier dispositif monoculaire 2 comportant une lame semi-réfléchissante 23. Sur la figure 1, le dispositif fonctionne de façon autonome. Il comprend essentiellement :
- Un premier corps mécanique 27 représenté en traits fins sur la figure ;
- Une première source d'images 21 disposée à l'intérieur de ce corps 27;
- Un premier ensemble optique comprenant essentiellement une première optique relais 22, un premier oculaire 24 et la lame semi-réfléchissante 23.

La source d'image 21 peut être un imageur de petite dimension, typiquement de l'ordre du centimètre que l'on appelle également en terminologie anglo-saxonne « «micro-display ». On peut utiliser pour réaliser ce micro-display une matrice à cristaux liquides éclairée par une source de lumière qui peut être, par exemple, constituée de diodes électroluminescentes. Cette imageur fournit par exemple des images et des informations de visée provenant d'une caméra montée sur l'arme du fantassin.

Cette image est focalisée sous la forme d'une image intermédiaire par une première optique-relais 22 dans le plan focal d'un premier oculaire . L'optique-relais est classiquement composée de différents groupes optiques 221 et 222 comprenant des lentilles optiques. Une lame semi-réfléchissante 23 est disposée à l'intérieur de cette optique-relais. Cette lame est une lame plane de faible épaisseur et est utilisée en réflexion. Son coefficient de réflexion vaut environ 50 pour cent de façon qu'elle puisse être utilisée également en transmission sans privilégier une voie optique par rapport à l'autre. Il est à noter que dans cette disposition, la moitié de l'énergie lumineuse est perdue par transmission à travers la lame semi-réfléchissante. Cependant, pour compenser cette perte d'énergie, il suffit que l'imageur ait une luminance plus élevée pour que la luminance finale vue par le fantassin soit satisfaisante, ce qui ne pose pas de problèmes techniques.

Le premier oculaire 24 forme de l'image intermédiaire une image collimatée à l'infini vue par l'observateur. La pupille de sortie de l'oculaire se superpose avec la pupille de l'oeil du fantassin. Le tirage d'oeil de cet oculaire est suffisamment dimensionné pour assurer le confort de visée. L'oculaire peut être muni d'un réglage dioptrique.

Au moins un miroir plan de renvoi 25 permet de replier l'ensemble optique dans un encombrement réduit de faible épaisseur.

Le premier corps mécanique 27 assure plusieurs fonctions qui sont le maintien des différents éléments du système et leur protection vis-à-vis des agressions de l'environnement extérieur qui peut être particulièrement sévère pour un fantassin en mission. Il porte également des moyens d'accouplement permettant d'accoupler ledit dispositif à un second dispositif de visualisation. Ces moyens ne sont pas représentés sur la figure 1.

Ledit dispositif de visualisation comporte également un cache de protection 26 escamotable qui est disposé devant la lame semi-réfléchissante 23 lorsque le dit dispositif 2 est utilisé de façon autonome. Ce cache opaque assure à la fois la protection mécanique de la lame semi-réfléchissante et empêche qu'aucune lumière parasite ne pénètre à l'intérieur de l'optique-relais. Le cache de protection 26 peut être indépendant du premier corps mécanique comme représenté sur la figure 1 ou être rendu solidaire dudit corps 27. Dans ce cas, en position escamotée, il rentre dans un logement disposé dans le corps mécanique et prévu à cet effet.

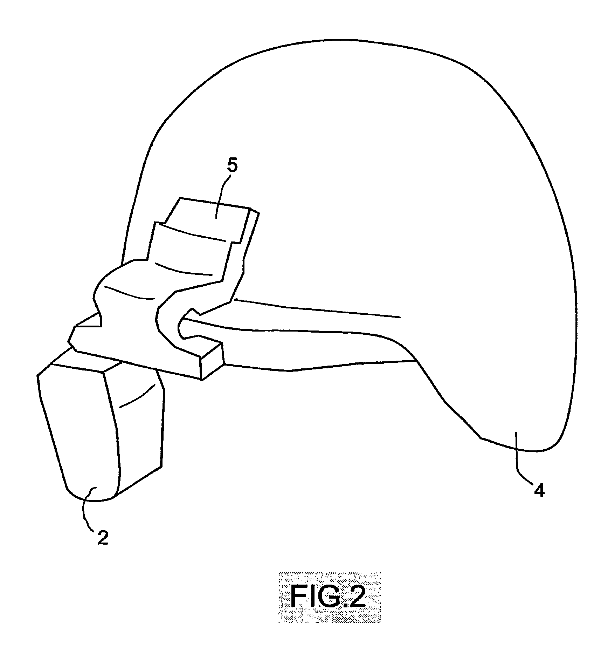

Le premier corps mécanique 27 peut comporter également des moyens de fixation sur le casque du fantassin comme il est indiqué sur la figure 2 où le dispositif est représenté monté sur un casque 4. Dans ce cas, le casque comporte un support mécanique d'accrochage 5 destiné à fixer le dispositif de visualisation monoculaire 2. Ces moyens de fixation comportent des parties mécaniques permettant de fixer le dispositif soit sur l'oeil droit, soit sur l'oeil gauche du fantassin. Ils peuvent également comporter des moyens de réglage permettant de positionner au mieux la pupille de sortie de l'oculaire dans la pupille de l'oeil du fantassin. Le dispositif permet alors de prendre une visée déportée utile au tir tout en laissant libre l'autre oeil, permettant de garantir au fantassin une sécurité maximale au moment du tir.

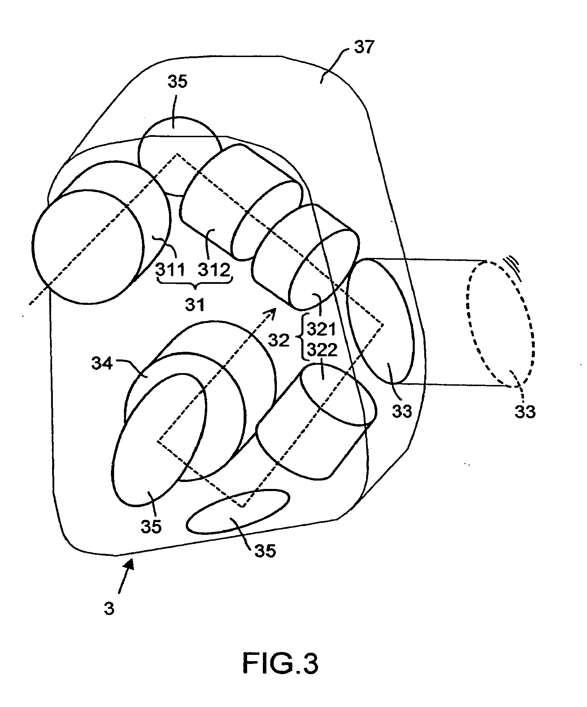

La figure 3 représente un second dispositif monoculaire 3 comportant un miroir escamotable 33, ledit second dispositif pouvant être couplé à un premier dispositif de visualisation 2. Sur la figure 3, ledit second dispositif fonctionne de façon autonome. Il comprend essentiellement :
- Un second corps mécanique 37 représenté en traits fins sur la figure ;
- Une seconde source d'images 31 disposée à l'intérieur de ce corps 37;
- Un second ensemble optique comprenant essentiellement une seconde optique relais 32, un second oculaire 34 et le miroir escamotable 33.

La source d'image 31 fournit des images intensifiées du paysage extérieur. Elle comprend essentiellement un objectif amont grand champ 311 et un intensificateur de lumière 312. L'objectif amont 311 forme une image du paysage extérieur sur la surface photosensible de l'intensificateur qui en fournit une image intensifiée sur sa face arrière. Lorsque l'intensificateur ne dispose pas de dispositif inverseur d'images, l'image intensifiée est naturellement inversée par rapport à l'image initiale provenant de la surface photosensible. La combinaison optique comprenant l'optique-relais 32, les miroirs de renvoi 35 et l'oculaire 34 est agencée de telle sorte que l'image finale collimatée a le même sens que l'image du paysage extérieur. Il n'est donc pas nécessaire que l'intensificateur possède un dispositif inverseur d'images. L'objectif amont grand champ 311 est muni d'un mécanisme de mise au point.

Cette image intensifiée est focalisée sous la forme d'une image intermédiaire par une seconde optique-relais 32 dans le plan focal d'un second oculaire 34. L'optique-relais 32 est classiquement composée de différents groupes optiques 321 et 322 comprenant des lentilles optiques. Un miroir plan escamotable 33 est disposé à l'intérieur de cette optique-relais. Le miroir de protection peut être indépendant du second corps mécanique 37 ou être rendu solidaire dudit corps. Dans ce cas, en position escamotée, il rentre dans un logement disposé dans le corps mécanique et prévu à cet effet. Dans cette dernière disposition, le miroir est constamment protégé de l'extérieur qu'il soit en position escamoté ou non.

Le second oculaire 34 forme de l'image intermédiaire une image collimatée à l'infini vue par l'observateur. La pupille de sortie de l'oculaire se superpose avec la pupille de l'oeil du fantassin. Le tirage d'oeil de cet oculaire est suffisamment dimensionné pour assurer le confort de visée. L'oculaire 34 peut être également muni d'un réglage dioptrique.

Des miroirs plans 35 de renvoi permettent de replier l'ensemble optique dans un encombrement réduit de faible épaisseur.

Le second corps mécanique 37 assure plusieurs fonctions qui sont le maintien des différents éléments du système et leur protection vis-à-vis des agressions de l'environnement extérieur qui peut être particulièrement sévère pour un fantassin en mission. Il porte également des moyens d'accouplement permettant d'accoupler ledit dispositif au premier dispositif de visualisation. Ces moyens ne sont pas représentés sur la figure 3.

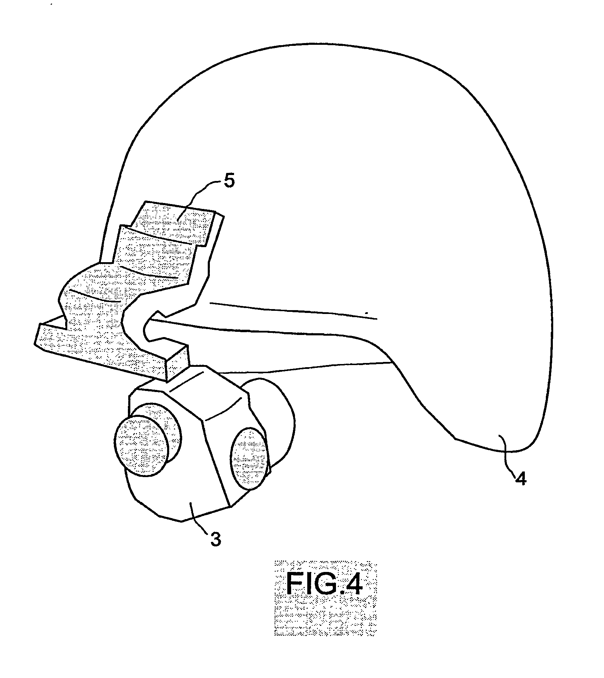

Le second corps mécanique 37 peut comporter également des moyens de fixation sur le casque du fantassin comme il est indiqué sur la figure 4 où le dispositif est représenté monté sur un casque 4. Dans ce cas, le casque comporte un support mécanique d'accrochage 5 destiné à fixer le dispositif de visualisation monoculaire 2. Ces moyens de fixation comportent des parties mécaniques permettant de fixer le dispositif soit sur l'oeil droit, soit sur l'oeil gauche du fantassin. Ils peuvent également comporter des moyens de réglage permettant de positionner au mieux la pupille de sortie de l'oculaire dans la pupille de l'oeil du fantassin. Le dispositif permet alors d'assurer une vision intensifiée du paysage extérieur sur un oeil, l'autre oeil restant libre.

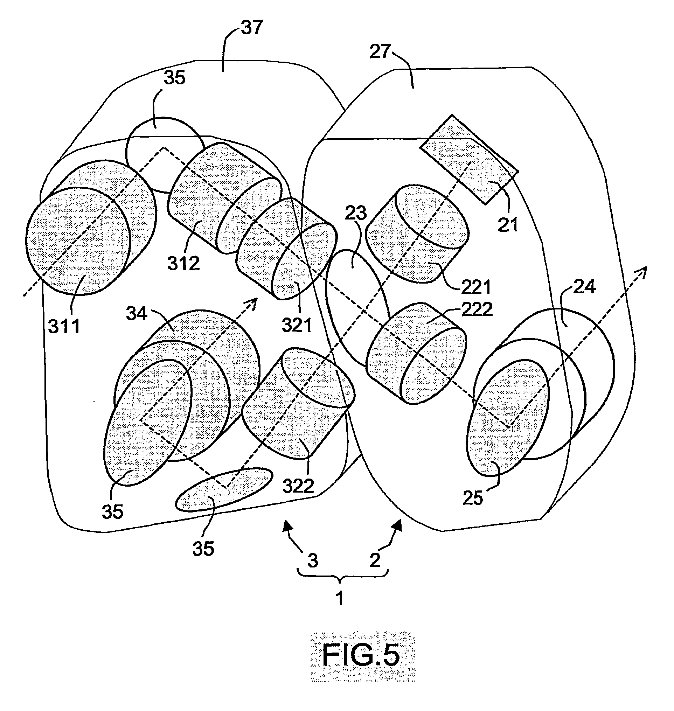

La figure 5 représente le premier et le second dispositif de visualisation lorsqu'ils sont assemblés par leurs moyens d'accouplement pour former un dispositif bioculaire 1. Dans ce cas, le cache de protection 26 est escamoté devant la lame semi-réfléchissante 23 et le miroir plan 33 est également escamoté.

Pour que le dispositif bioculaire 1 puisse fonctionner correctement, trois conditions optiques doivent être remplies :
- Il est nécessaire que la puissance optique de l'ensemble constitué par la première optique-relais 22 et le premier oculaire 24 soit identique à la puissance optique de l'ensemble constitué par la seconde optique-relais 32 et le second oculaire 34 ;
- Il est nécessaire que la lame semi-réfléchissante du premier dispositif occupe exactement la même position qu'occupait le miroir du second dispositif avant escamotage ;
- Il est également nécessaire que la distance séparant les deux oculaires soit environ égale à la distance interpupillaire, soit environ 65 millimètres.

Les images de la première et de la seconde sources d'images sont transmises à travers les première et seconde optiques-relais et les premier et second oculaires par réflexion et transmission sur la lame semi-réfléchissante vers les deux yeux de l'observateur. Par conséquent, pour assurer une vision binoculaire correcte, les images transmises doivent être de taille angulaire identiques et par conséquent les puissances optiques du premier ensemble optique et du second ensemble optique doivent être égales.

Lorsque le tube intensificateur 312 de la seconde source d'images est allumé, l'équipement permet alors la vision nocturne bioculaire utile à l'observation de nuit de longue durée avec un bon confort visuel. La première source d'images peut également être allumée et afficher des informations sous le forme d'une symbologie simple qui sera vue par les deux yeux en superposition avec l'image intensifiée.

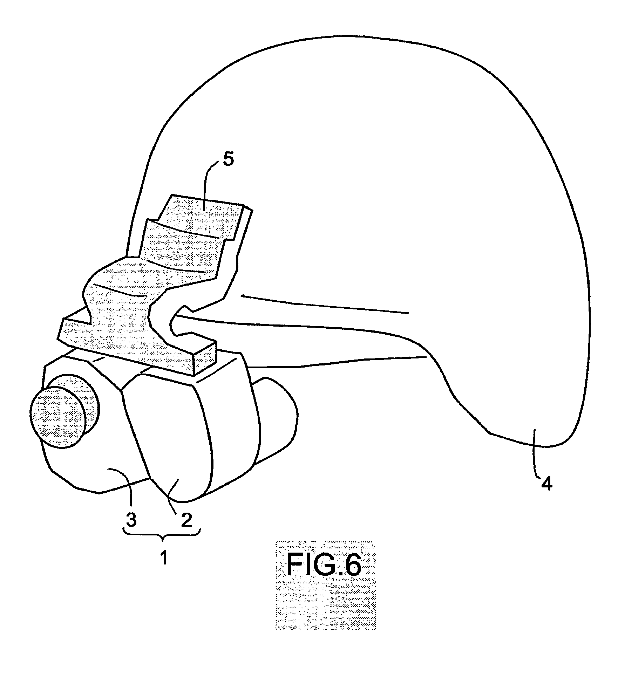

L'ensemble du dispositif bioculaire peut être monté sur le casque 4 du fantassin par les moyens de fixation des premier et second dispositif monoculaire de visualisation comme indiqué sur la figure 6.

## Revendications

1. Dispositif de visualisation bioculaire modulaire (1) comprenant un premier dispositif de visualisation monoculaire (2) placé devant un des yeux d'un observateur et un second dispositif de visualisation monoculaire (3) placé devant l'autre oeil dudit observateur, le premier dispositif (2) comportant un premier corps mécanique (27), une première source d'images (21), une première optique-relais (22) et un premier oculaire (24), le second dispositif comportant un second corps mécanique (37), une seconde source d'images (31), une seconde optique-relais (32) et un second oculaire (34), **caractérisé en ce que :**
• la première optique-relais (22) comporte une lame plane semi-réfléchissante (23) ;
• la puissance optique de l'ensemble constitué par la première optique-relais (22) et le premier oculaire (24) est identique à la puissance optique de l'ensemble constitué par la seconde optique-relais (32) et le second oculaire (34) ;
• le premier dispositif de visualisation (2) comporte un cache de protection (26) escamotable pouvant être disposé devant ladite lame semi-réfléchissante (23) ;
• le premier corps mécanique (27) comporte des premiers moyens d'accouplement mécanique ;
• le second dispositif de visualisation comporte un miroir plan (33) escamotable pouvant être disposé dans la seconde optique-relais (32),
• le second corps mécanique (37) comporte également des seconds moyens d'accouplement mécanique destinés à s'accoupler avec les premiers moyens d'accouplement mécanique de façon à solidariser ou à désolidariser le premier dispositif de visualisation monoculaire (2) avec le second dispositif de visualisation monoculaire (3) ;
• lorsque le premier dispositif de visualisation est solidarisé avec le second dispositif de visualisation, le cache de protection (26) est escamoté devant la lame semi-réfléchissante (23); le miroir plan (33) est également escamoté, la lame semi-réfléchissante (23) occupe la position du miroir plan (33) avant escamotage dudit miroir (33), les images de la première et de la seconde sources d'images sont transmises à travers les première et seconde optiques-relais et les premier et second oculaires par réflexion et transmission sur la lame semi-réfléchissante (23) vers les deux yeux de l'observateur ;
• lorsque le premier dispositif de visualisation fonctionne de façon autonome, le cache de protection escamotable est disposé devant la lame semi-réfléchissante (23) ;
• lorsque le second dispositif de visualisation fonctionne de façon autonome, le miroir plan escamotable est disposé dans la seconde optique-relais (32).

2. Dispositif de visualisation bioculaire selon la revendication 1, **caractérisé en ce que** au moins une des source d'images (21, 31) est un imageur matriciel, notamment un imageur à cristaux liquides.

3. Dispositif de visualisation bioculaire selon l'une des revendications 1 à 2, **caractérisé en ce que** au moins une des sources d'images (21, 31) est constitué d'un objectif de focalisation (311) et d'un intensificateur de lumière (312).

4. Dispositif de visualisation monoculaire ou bioculaire selon l'une des revendications 1 à 3, **caractérisé en ce que** au moins un des corps mécaniques (27, 37) comportent des moyens de fixation.

## Claims

1. Modular binocular display device (1) comprising a first monocular display device (2) placed in front of one of the eyes of an observer and a second monocular display device (3) placed in front of the other eye of the said observer, the first device (2) comprising a first mechanical body (27), a first image source (21), first relay optics (22) and a first eyepiece (24), the second device comprising a second mechanical body (37), a second image source (31), second relay optics (32) and a second eyepiece (34), **characterized in that:**
• the first relay optics (22) comprises a semi-reflecting plane prism (23);
• the optical power of the assembly formed by the first relay optics (22) and the first eyepiece (24) is identical to the optical power of the assembly formed by the second relay optics (32) and the second eyepiece (34);
• the first display device (2) comprises a retractable protective shutter (26) capable of being disposed in front of the said semi-reflecting prism (23) ;
• the first mechanical body (27) comprises first mechanical coupling means;
• the second display device comprises a retractable plane mirror (33) capable of being disposed in the second relay optics (32);
• the second mechanical body (37) also comprises second mechanical coupling means designed to be coupled with the first mechanical coupling means in such a manner as to rigidly attach or detach the first monocular display device (2) to/from the second monocular display device (3);
• when the first display device is rigidly attached to the second display device, the protective shutter (26) is retracted in front of the semi-reflecting prism (23); the plane mirror (33) is also retracted, the semi-reflecting prism (23) occupies the position of the plane mirror (33) before the retraction of the said mirror (33), the images from the first and from the second image sources are transmitted through the first and second relay optics and the first and second eyepieces by reflection off and transmission through the semi-reflecting prism (23) towards both eyes of the observer;
• when the first display device operates in an autonomous manner, the retractable protective shutter is disposed in front of the semi-reflecting prism (23);
• when the second display device operates in an autonomous manner, the retractable plane mirror is disposed in the second relay optics (32).

2. Binocular display device according to Claim 1, **characterized in that** at least one of the image sources (21, 31) is a matrix imager, in particular an LCD imager.

3. Binocular display device according to either of Claims 1 and 2, **characterized in that** at least one of the image sources (21, 31) is formed by a focussing object lens (311) and by a light intensifier (312).

4. Monocular or binocular display device according to one of Claims 1 to 3, **characterized in that** at least one of the mechanical bodies (27, 37) comprises attachment means.

## Patentansprüche

1. Modulare binokulare Anzeigevorrichtung (1), die eine erste monokulare Anzeigevorrichtung (2), die vor einem der Augen eines Betrachters angeordnet ist, und eine zweite monokulare Anzeigevorrichtung (3) aufweist, die vor dem anderen Auge des Betrachters angeordnet ist, wobei die erste Vorrichtung (2) einen ersten mechanischen Körper (27), eine erste Bildquelle (21), eine erste Relaisoptik (22) und ein erstes Okular (24) aufweist, wobei die zweite Vorrichtung einen zweiten mechanischen Körper (37), eine zweite Bildquelle (31), eine zweite Relaisoptik (32) und ein zweites Okular (34) aufweist, **dadurch gekennzeichnet, dass:**
• die erste Relaisoptik (22) eine ebene halbreflektierende Lamelle (23) aufweist;
• die optische Leistung der aus der ersten Relaisoptik (22) und dem ersten Okular (24) bestehenden Einheit gleich der optischen Leistung der aus der zweiten Relaisoptik (32) und dem zweiten Okular (34) bestehenden Einheit ist;
• die erste Anzeigevorrichtung (2) eine zurückziehbare Schutzabdeckung (26) aufweist, die vor der halbreflektierenden Lamelle (23) angeordnet werden kann;
• der erste mechanische Körper (27) erste Mittel zur mechanischen Kopplung aufweist;
• die zweite Anzeigevorrichtung einen zurückziehbaren ebenen Spiegel (33) aufweist, der in der zweiten Relaisoptik (32) angeordnet werden kann;
• der zweite mechanische Körper (37) ebenfalls zweite Mittel zur mechanischen Kopplung aufweist, die dazu bestimmt sind, mit den ersten Mitteln zur mechanischen Kopplung gekoppelt zu werden, um die erste monokulare Anzeigevorrichtung (2) fest mit der zweiten monokularen Anzeigevorrichtung (3) zu verbinden oder davon zu lösen;
• wenn die erste Anzeigevorrichtung fest mit der zweiten Anzeigevorrichtung verbunden ist, die Schutzabdeckung (26) vor der halbreflektierenden Lamelle (23) zurückgezogen wird; der ebene Spiegel (33) ebenfalls zurückgezogen wird, die halbreflektierende Lamelle (23) die Stellung des ebenen Spiegels (33) vor dem Zurückziehen des Spiegels (33) einnimmt, die Bilder der ersten und der zweiten Bildquelle über die erste und die zweite Relaisoptik und das erste und das zweite Okular durch Reflexion und Übertragung auf der halbreflektierenden Lamelle (23) zu den zwei Augen des Betrachters übertragen werden;
• wenn die erste Anzeigevorrichtung autonom arbeitet, die zurückziehbare Schutzabdeckung vor der halbreflektierenden Lamelle (23) angeordnet ist;
• wenn die zweite Anzeigevorrichtung autonom arbeitet, der zurückziehbare ebene Spiegel in der zweiten Relaisoptik (32) angeordnet ist.

2. Binokulare Anzeigevorrichtung nach Anspruch 1,
**dadurch gekennzeichnet, dass** mindestens eine der Bildquellen (21, 31) ein Matrix-Bildgeber, insbesondere ein Flüssigkristall-Bildgeber ist.

3. Binokulare Anzeigevorrichtung nach einem der Ansprüche 1 bis 2, **dadurch gekennzeichnet, dass** mindestens eine der Bildquellen (21, 31) aus einem Fokussierobjektiv (311) und aus einem Lichtverstärker (312) besteht.

4. Monokulare oder binokulare Anzeigevorrichtung nach einem der Ansprüche 1 bis 3, **dadurch gekennzeichnet, dass** mindestens einer der mechanischen Körper (27, 37) Befestigungsmittel aufweist.
